# EUROPÄISCHE PATENTSCHRIFT

(11) **EP 3 918 276 B1**
(45) Veröffentlichungstag und Bekanntmachung des Hinweises auf die Patenterteilung: **05.04.2023**
(21) Anmeldenummer: 20702262.5
(22) Anmeldetag: 24.01.2020
(51) Int. Cl.: G01B 11/27, G09F 9/37, G09F 9/302, G01S 7/497

(54) **MUSTERTAFEL**
PATTERN PANEL
TABLEAU DE MOTIFS

(30) Priorität: 29.01.2019 DE 102019102228
(43) Veröffentlichungstag der Anmeldung: 08.12.2021
(73) Patentinhaber: Beissbarth GmbH, 80993 München (DE)
(72) Erfinder: BACKES, Jochen, 80993 München (DE); PUCNIK, Darko, 80993 München (DE); RAMAIAH, Ashok, 80993 München (DE); MAKRA, Imre, 80993 München (DE); BAUMGARTNER, Andreas, 80993 München (DE)
(74) Vertreter: Schmitt-Nilson Schraud Waibel Wohlfrom Patentanwälte Partnerschaft mbB
(86) Internationale Anmeldenummer: PCT/EP2020/051774
(87) Internationale Veröffentlichungsnummer: WO 2020/156952

(56) Entgegenhaltungen:
- CN-U- 207 122 729
- DE-A1-102010 062 696
- DE-A1-102014 113 919
- DE-U1-202012 103 273
- JP-A- 2012 242 808
- US-A1- 2012 275 014
- US-A1- 2018 100 783
- Bettina Schegel: "Revolutionary MAHLE solution for calibrating driver assistance systems", , 11. September 2018 (2018-09-11), Seiten 1-5, XP055682744, Gefunden im Internet: URL:https://www.mahle.com/en/news-and-pres s/press-releases/revolutionary-mahle-solut ion-for-calibrating-driver-assistance-syst ems-63361 [gefunden am 2020-04-03]

## Beschreibung

Die Erfindung betrifft eine Mustertafel zur Fahrzeugvermessung und/oder zum Kalibrieren einer Sensorvorrichtung in einem Kraftfahrzeug.

Sowohl zur Fahrzeugvermessung, insbesondere zur Achsvermessung, als auch zum Kalibrieren von Sensorvorrichtungen in einem Kraftfahrzeug, insbesondere von Sensorvorrichtungen für Fahrerassistenzsysteme, kommen Mustertafeln, sogenannte "Targets", zu Einsatz, auf denen wenigstens ein vorgegebenes graphisches Muster ausgebildet ist.

Unterschiedliche Hersteller von Fahrzeugen bzw. Fahrerassistenzsystemen geben unterschiedliche Muster vor. Insbesondere herstellerunabhängige Werkstätten müssen daher eine große Anzahl unterschiedlicher Mustertafeln vorhalten. Dies hat einen erheblichen Platzbedarf zur Folge. Da die graphischen Muster mit hoher Präzision gefertigt werden müssen, um die erforderliche Genauigkeit der Messergebnisse zu gewährleisten, ist die Herstellung der Mustertafeln teuer. Das Vorhalten einer großen Anzahl unterschiedlicher Mustertafeln ist daher auch mit erheblichen Kosten verbunden.

Es ist daher einer Aufgabe der Erfindung, die Anzahl der in einer Werkstatt vorzuhaltenden Mustertafeln zu reduzieren.

"Revolutionary MAHLE solution for calibrating driver assistance systems" von Bettina Schegel, 11. September 2018 (2018-09-11), Seiten 1-5, XP055682744, abrufbar unter https://www.mahle.com/en/news-and-press/press-releases/ revolutionary-mahle-solution-for-calibrating-driver-assistance-systems-63361, offenbart ein System zum Kalibrieren eines Fahrerassistenzsystems mit einer digitalen Anzeigevorrichtung ("Digital Calibration Panel"), die es ermöglicht, verschiedene Muster anzuzeigen.

DE 10 2014 113 919 A1 offenbart eine Überprüfungsvorrichtung für Fahrzeug-Fahrerassistenzsysteme, die an einem Fahrzeug angebracht sind, wobei die Überprüfungsvorrichtung aufweist: eine Gestelleinheit, welche Säulenstrukturen, wo Fahrzeuge vorwärts hereinkommen und rückwärts herauskommen, an Ecken eines Basisgestells aufweist, wobei ein Obergestell mit oberen Endabschnitten der Säulenstrukturen gekuppelt ist, eine Spurhaltesystem-Korrektureinheit, die so an dem Obergestell installiert ist, dass sie in mehrere Achsrichtungen bewegbar ist, um einen Kameramesspunkt eines Spurhaltesystems an einer Vorderseite des Fahrzeugs zu korrigieren, und die dazu eingerichtet ist, ein Korrekturziel mit Bezug auf die Kamera als ein Bild anzuzeigen, und eine Spurhaltesystem-Überprüfungseinheit, die so an dem Obergestell installiert ist, dass sie in mehrere Achsrichtungen bewegbar ist, um einen Normalbetrieb des Spurhaltesystems zu überprüfen, und welche eingerichtet ist, um eine Fahrspur als ein Bild anzuzeigen.

Eine erfindungsgemäße Mustertafel, die zur Fahrzeugvermessung und/ oder zum Kalibrieren einer Sensorvorrichtung in einem Kraftfahrzeug verwendbar ist, umfasst eine Anzeigevorrichtung, die nach dem Prinzip des elektronischen Papiers arbeitet und die ausgebildet ist, wahlweise eines von mehreren unterschiedlichen Mustern anzuzeigen. Die Muster umfassen mehrere Musterelemente. Die Anzeigevorrichtung weist mehrere Elektroden auf, die jeweils die Form eines der Musterelemente oder eines Teilbereichs eines der Musterelemente haben, so dass die Form der Musterelemente jeweils durch die physikalische Struktur der Anzeigevorrichtung vorgegeben ist.

Durch geeignetes Ansteuern der Anzeigevorrichtung wird diese dazu gebracht, das für das jeweilige Fahrzeug und/oder Fahrerassistenzsystem benötigte Muster anzuzeigen.

Eine einzige Mustertafel kann so zum Vermessen einer Vielzahl unterschiedlicher Fahrzeuge und/oder zum Kalibrieren einer Vielzahl unterschiedlicher Fahrerassistenzsysteme verwendet werden.

Die Anzahl der in einer Werkstatt, insbesondere in einer herstellerunabhängigen Werkstatt, vorzuhaltenden Mustertafeln kann auf diese Weise erheblich reduziert werden. Im Ergebnis können sowohl der Platzbedarf als auch die Anschaffungskosten für die in einer Werkstatt vorzuhaltenden Mustertafeln deutlich verringert werden.

Dadurch, dass die Form der Musterelemente durch die physikalische Struktur der Anzeigevorrichtung vorgegeben ist, können die Musterelemente mit hohem Kontrast und mit großer Präzision dargestellt werden. Solche Mustertafeln ermöglichen es, die Fahrzeugvermessung bzw. das Kalibrieren des Fahrerassistenzsystems mit hoher Genauigkeit durchzuführen. Insbesondere kann die Form der Musterelemente mit hoher Präzision und Zuverlässigkeit sehr exakt reproduziert werden.

Ausführungsbeispiele der Erfindung umfassen auch ein Verfahren des Kalibrierens einer Sensorvorrichtung in einem Kraftfahrzeug, insbesondere einer Sensorvorrichtung eines Fahrerassistenzsystems, wobei das Verfahren umfasst, eine Mustertafel gemäß einem Ausführungsbeispiel der Erfindung in einem Sichtfeld der Sensorvorrichtung anzuordnen und die Anzeigevorrichtung der Mustertafel derart anzusteuern, dass auf der Anzeigevorrichtung ein zum Kalibrieren der Sensorvorrichtung geeignetes Muster angezeigt wird.

Ausführungsbeispiele der Erfindung umfassen darüber hinaus ein Verfahren zur Fahrzeugvermessung, wobei das Verfahren umfasst, wenigstens eine Mustertafel gemäß einem Ausführungsbeispiel der Erfindung an einem zu vermessenden Fahrzeug, insbesondere an wenigstens einem Rad des zu vermessenden Fahrzeugs, anzubringen und die Anzeigevorrichtung der Mustertafel derart anzusteuern, dass auf der Anzeigevorrichtung ein zur Fahrzeugvermessung geeignetes Muster angezeigt wird.

In einer Ausführungsform ist die Anzeigevorrichtung elektrisch ansteuerbar, um wahlweise eines von den mehreren unterschiedlichen Mustern auszuwählen und anzuzeigen. Durch elektrisches Ansteuern kann das gewünschte Muster bequem aus den mehreren unterschiedlichen Mustern ausgewählt werden. Das elektrische Ansteuern kann insbesondere automatisiert und/oder über eine Fernbedienung erfolgen, so dass das gewünschte Muster beispielsweise vom Fahrzeug aus ausgewählt werden kann.

In einer Ausführungsform umfassen die Muster mehrere linienförmige, kreisförmige, kreissegmentförmige und/oder rechteckige Musterelemente, wie sie in der Fahrzeugvermessung und/oder zum Kalibrieren von Fahrerassistenzsystemen üblicherweise zum Einsatz kommen. Mustertafeln, die solche Musterelemente aufweisen, können herkömmliche Mustertafeln ersetzen, ohne dass die bisher zur Fahrzeugvermessung bzw. zum Kalibrieren von Fahrerassistenzsystemen verwendeten Geräte und Verfahren modifiziert werden müssen.

Die Anzeigevorrichtung kann auch modular aufgebaut sein und mehrere Module bzw. Zellen umfassen, wobei die Form eines Moduls bzw. einer Zelle jeweils der Form eines der Musterelemente oder eines Teilbereichs eines der Musterelemente entspricht.

In einer Ausführungsform weist die Mustertafel eine Steuerelektronik zum Ansteuern der Anzeigevorrichtung und eine autonome Stromversorgung, insbesondere einen elektrischen Akku oder eine elektrische Batterie auf. Eine solche Mustertafel kann autonom, insbesondere ohne eine äußere Kabelverbindung zu einer externen Steuerung und/oder Stromversorgung, betrieben werden. Eine autonome Mustertafel kann daher herkömmliche Mustertafeln ersetzen, ohne dass weitere Veränderungen an einem herkömmlichen Messplatz vorgenommen werden müssen.

In einer Ausführungsform weist die Mustertafel eine Halterung, insbesondere eine kodierte Halterung, auf, die es ermöglicht, die Mustertafel in einer vorgegebenen Position und Ausrichtung an einer Kalibriervorrichtung anzubringen. Auf diese Weise kann die Mustertafel mit hoher Genauigkeit an der Kalibriervorrichtung angebracht werden, und die Kalibrierung kann mit hoher Genauigkeit durchgeführt werden.

Ein Ausführungsbeispiel der Erfindung umfasst eine Kalibriervorrichtung zum Kalibrieren einer Sensorvorrichtung in einem Kraftfahrzeug, insbesondere einer Sensorvorrichtung eines Fahrerassistenzsystems. Die Kalibriervorrichtung umfasst einen Fuß, eine auf dem Fuß abgestützte Säule und wenigstens eine an der Säule angebrachte Mustertafel, die gemäß einem Ausführungsbeispiel der Erfindung ausgebildet ist. Eine solche Kalibriervorrichtung kann zum Kalibrieren einer Vielzahl unterschiedlicher Fahrerassistenzsysteme verschiedener Hersteller verwendet werden, ohne dass es erforderlich ist, eine Vielzahl unterschiedlicher Mustertafeln vorzuhalten.

In einer alternativen Ausführungsform weist die Mustertafel einen Radadapter auf, der es ermöglicht, die Mustertafel in einer vorgegebenen Position und Ausrichtung an einem Rad eines zu vermessenden Fahrzeugs anzubringen. Auf diese Weise kann eine Mustertafel gemäß einem Ausführungsbeispiele der Erfindung zur Fahrzeugvermessung, insbesondere zur Vermessung eines Fahrwerks eines Fahrzeugs, verwendet werden.

Ausführungsbeispiele der Erfindung werden im Folgenden unter Bezugnahme auf die beigefügten Figuren beschrieben.

Figur 1 zeigt eine perspektivische Ansicht eines Messplatzes mit einer Kalibriervorrichtung zum Kalibrieren eines Fahrerassistenzsystems.

Figur 2 zeigt eine schematische Draufsicht auf einen Messplatz zum Kalibrieren eines Fahrerassistenzsystems.

Die Figuren 3 und 4 zeigen perspektivische Explosionsansichten einer Mustertafel, die gemäß einem Ausführungsbeispiel der Erfindung ausgebildet ist.

Die Figuren 5 und 6 zeigen in perspektivischen Ansichten ein alternatives Ausführungsbeispiel einer Mustertafel, die gemäß einem Ausführungsbeispiel der Erfindung ausgebildet ist.

Die Figuren 7a und 7b zeigen schematische Schnittansichten durch eine Anzeigevorrichtung gemäß einem möglichen Ausführungsbeispiel der Erfindung.

Die Figuren 8 und 9 zeigen jeweils eine schematische Schnittansicht durch ein eine Anzeigevorrichtung gemäß einem alternativen Ausführungsbeispiel der Erfindung.

Die Figuren 10A bis 10E zeigen Beispiele von Mustern, wie sie zur Fahrzeugvermessung und/oder zum Kalibrieren von Sensorvorrichtungen von Fahrerassistenzsystemen zum Einsatz kommen.

Figur 11 zeigt eine schematische Ansicht einer Anordnung von Elektroden einer Anzeigevorrichtung gemäß einem Ausführungsbeispiel der Erfindung.

Figur 12 zeigt eine schematische Schnittansicht einer modular aufgebauten Anzeigevorrichtung.

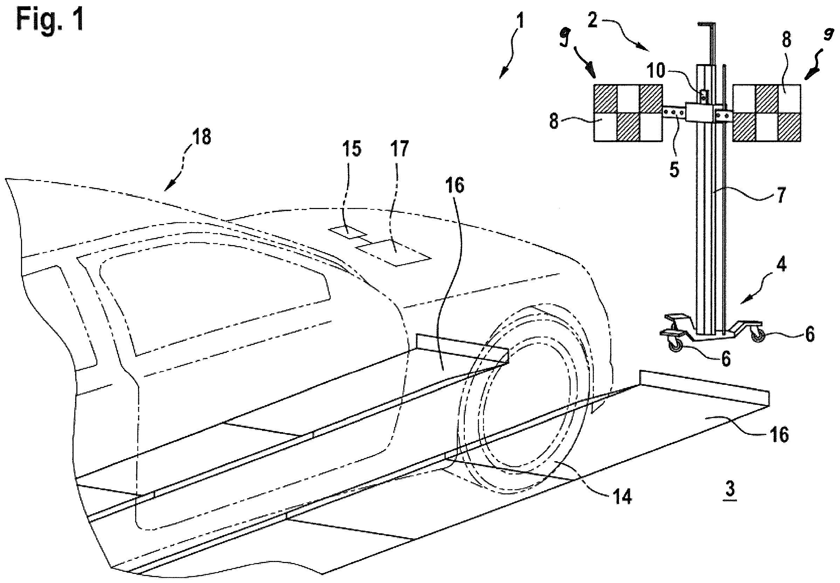

Figur 1 zeigt eine perspektivische Ansicht eines Messplatzes 1 mit einem Fahrzeug, insbesondere einem Kraftfahrzeug, 18 und einer Kalibriervorrichtung 2 zum Kalibrieren einer Sensorvorrichtung 17 eines in dem Fahrzeug 18 verbauten Fahrerassistenzsystems 15.

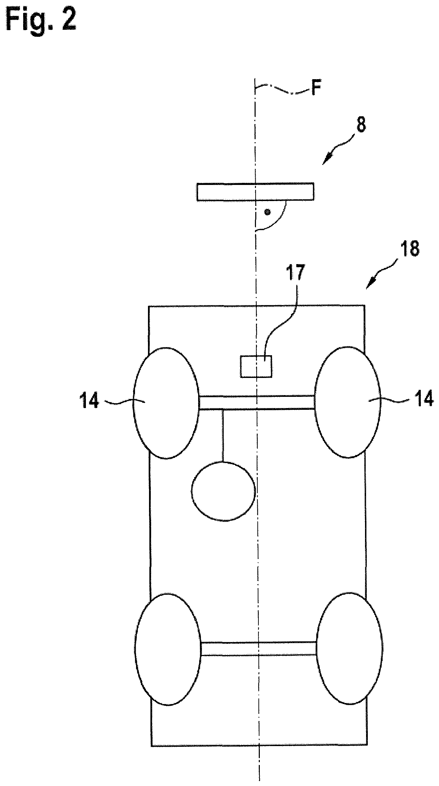

Figur 2 zeigt eine schematische Draufsicht auf einen Messplatz 1 zum Kalibrieren eines Fahrerassistenzsystems 15.

Der in der Figur 1 gezeigte Messplatz 1 weist zwei auf einem Boden 3 des Messplatzes 1 angeordnete Fahrschienen 16 auf, auf denen ein Fahrzeug 18 positionierbar ist. Die Fahrschienen 16 sind optional und nicht zwingend erforderlich. Die Vorderräder 14 des Fahrzeugs 18 können auf, in der Figur 1 nicht gezeigten, optionalen Drehplatten angeordnet sein, um Lenkeinschläge der Vorderräder 14 zu ermöglichen.

Die Kalibriervorrichtung 2 umfasst einen Fuß 4, der auf Rollen 6 beweglich gelagert ist, so dass die Position und die Position der Kalibriervorrichtung 2 zur Grobausrichtung der Kalibriervorrichtung 2 im Raum leicht veränderbar sind. An den Rollen 6 können (in der Figur 1 nicht gezeigte) Bremsen vorgesehen sein, die es ermöglichen, durch Aktivieren der Bremsen ein unbeabsichtigtes Bewegen der Kalibriervorrichtung 2 auf dem Boden 3 des Messplatzes 1 zu verhindern.

Auf dem Fuß 4 ist eine Säule 7 angebracht, die sich im Wesentlichen in vertikaler Richtung, d.h. senkrecht zum Boden 3 des Messplatzes 1 erstreckt.

Ein als Querbalken ausgebildeter Träger 5 ist höhenverstellbar an der Säule angebracht. Der Träger 5 trägt zwei Mustertafeln ("Referenztargets") 8, die zum Kalibrieren der Sensorvorrichtung 17 des in dem Fahrzeug 18 verbauten Fahrerassistenzsystems 15 ausgebildet sind.

Zum Kalibrieren des Fahrerassistenzsystems 15 müssen die Mustertafeln 8 an einer vom Hersteller des Fahrerassistenzsystems 15 vorgegebenen Position und in einem rechten Winkel zur Fahrachse F des Fahrzeugs 18, ausgerichtet werden (siehe Figur 2). Dies kann beispielsweise mit Hilfe eines an der Kalibriervorrichtung 2 vorgesehenen Ausrichtlasers 10 erfolgen.

Durch Verschieben und Drehen der Kalibriervorrichtung 2 auf dem Boden 3 des Messplatzes 1 können sowohl die Position (x- und y-Richtung) als auch die Ausrichtung (Gierwinkel) der Mustertafeln 8 im Raum eingestellt werden.

Jeder Fahrzeughersteller bzw. Hersteller eines Fahrerassistenzsystems 15 verlangt üblicherweise andere Muster 9 auf den Mustertafeln 8.

Insbesondere herstellerunabhängige Werkstätten müssen daher eine Vielzahl unterschiedlicher Mustertafeln 8 bereithalten, um die unterschiedlichen Bedürfnisse aller Hersteller abdecken zu können.

Gemäß einem Grundgedanken der Erfindung ist eine erfindungsgemäße Mustertafel 8 so ausgebildet, dass sie in der Lage ist, wahlweise eines von mehreren unterschiedlichen Mustern 9 darzustellen. Dadurch kann auf das Vorhalten einer Vielzahl unterschiedlicher Mustertafeln 8 verzichtet werden.

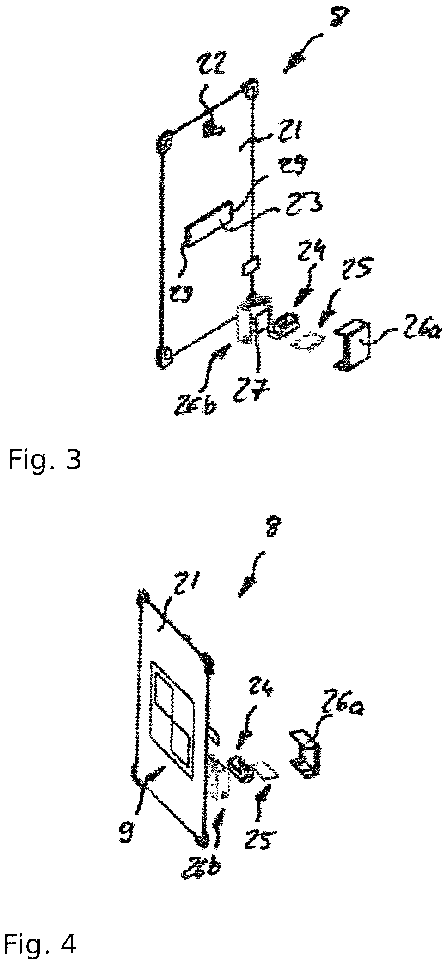

Die Figuren 3 und 4 zeigen perspektivische Explosionsansichten einer Mustertafel 8, die gemäß einem Ausführungsbeispiel der Erfindung ausgebildet ist.

Eine erfindungsgemäße Mustertafel 8 umfasste eine flache Anzeigevorrichtung 21, die nach dem Prinzip des elektronischen Papiers ("E-Paper" bzw. "E-Book") arbeitet und die ausgebildet ist, abhängig von einer jeweiligen Ansteuerung auf einer Anzeigesseite (Vorderseite) eines von mehreren möglichen Mustern 9 anzuzeigen (siehe Figur 4).

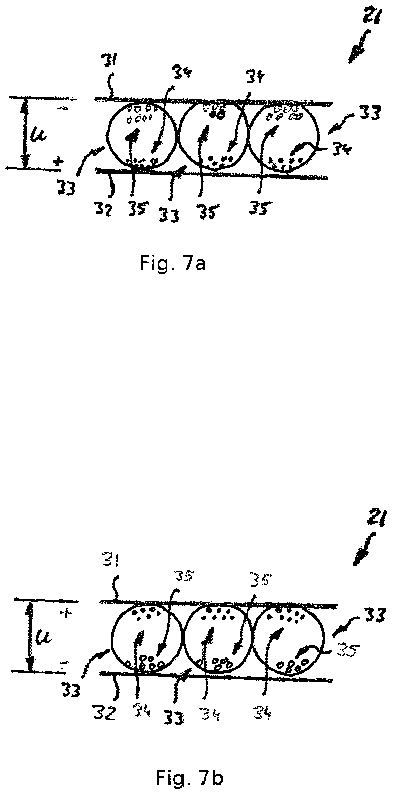

Ausführungsbeispiele und Funktionsweisen derartiger Anzeigevorrichtungen 21, die nach dem Prinzip elektronischen Papiers arbeiten, werden später unter Bezugnahme auf die Figuren 7a bis 12 beschrieben.

An der Rückseite der Anzeigevorrichtung 21 (siehe Figur 3) ist eine Halterung 23, insbesondere eine kodierte Halterung 23 vorgesehen, die es ermöglicht, die Anzeigevorrichtung 21 in einer vorgegebenen Position und Ausrichtung an dem Träger 5 einer Kalibriervorrichtung 2 anzubringen.

Eine kodierte Halterung 23 kann insbesondere wenigstens zwei Vorsprünge oder Nasen 29 aufweisen, die ausgebildet sind, in korrespondierende Öffnungen, die an oder in dem Träger 5 der Kalibriervorrichtung 2 ausgebildet sind, einzugreifen, um die Anzeigevorrichtung 21 in einer exakt vorgegebenen Position und Ausrichtung an dem Träger 5 der Kalibriervorrichtung 2 anzubringen.

Auf der Rückseite der Anzeigevorrichtung 21 ist auch eine Absturzsicherung 22 vorgesehen, die es ermöglicht, die Anzeigevorrichtung 21 über einen nicht gezeigten Draht oder eine nicht gezeigte Schnur zusätzlich an der Kalibriervorrichtung 2 zu befestigen und so zusätzlich zu sichern, um ein Abfallen der Mustertafel 8 von der Kalibriervorrichtung 2 zu verhindern.

An der Rückseite der Anzeigevorrichtung 21 ist darüber hinaus ein Gehäuse 26a, 26b angebracht, das zwei Gehäuseteile 26a, 26b umfasst. Das Gehäuse 26a, 26b beherbergt eine Stromversorgung 24, z.B. einen elektrischen Akku oder eine elektrische Batterie, und eine elektrische Steuerelektronik 25, die zum Ansteuern der Anzeigevorrichtung 21 ausgebildet ist. Zusätzlich kann in dem Gehäuse 26a, 26b eine Empfangsvorrichtung 27 vorgesehen sein, die es ermöglicht, die elektrische Steuerelektronik 25 drahtlos, z.B. über eine WLAN- oder Bluetooth^{®}-Funkverbindung, anzusteuern.

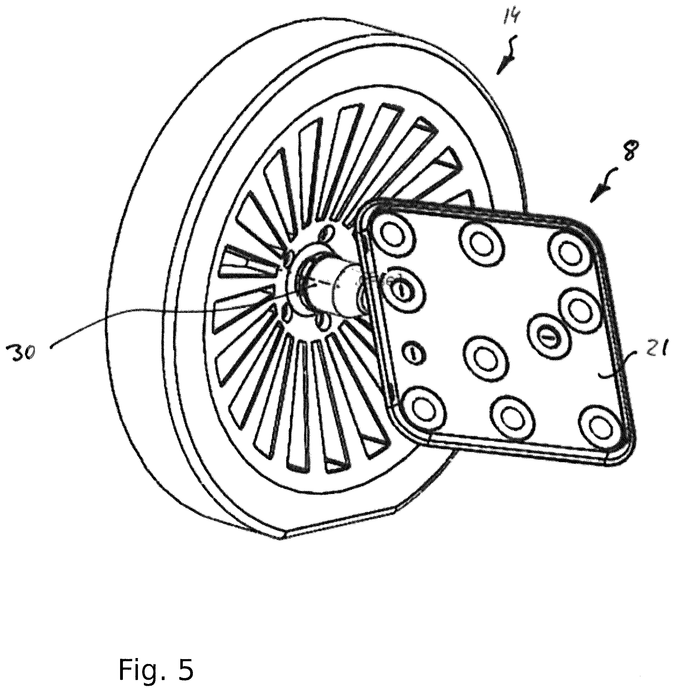

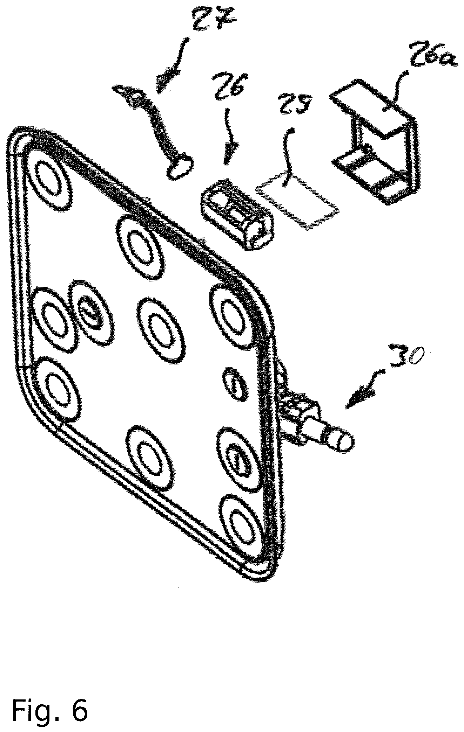

Die Figuren 5 und 6 zeigen perspektivische Ansichten eines alternativen Ausführungsbeispiels einer Mustertafel 8, die als Messplatte zur Fahrwerksvermessung ausgebildet und über einen Radadapter 30 an einem Rad 14 eines (in den Figuren 5 und 6 nicht gezeigten) Fahrzeugs 18 angebracht ist.

Abgesehen von dem Radadapter 30, der es ermöglicht, die Mustertafel 8 an einem Rad 14 zu befestigen, entspricht der Aufbau der Mustertafel 8 mit der Anzeigevorrichtung 21 und dem auf der Rückseite der Anzeigevorrichtung 21 angebrachten Gehäuse 26a, 26b mit der Stromversorgung 24, der elektrischen Steuerelektronik 25 und der optionalen Empfangsvorrichtung 27 im Wesentlichen dem in den Figuren 3 und 4 gezeigtem Aufbau und wird daher nicht erneut im Detail beschrieben.

Die Figuren 7a und 7b zeigen schematische Schnittansichten durch eine Anzeigevorrichtung 21 gemäß einem möglichen Ausführungsbeispiel, die auf dem Prinzip des elektronischen Papiers, insbesondere auf Elektrophorese basiert.

Die in den Figuren 7a und 7b gezeigte Anzeigevorrichtung 21 hat eine transparente erste Elektrode 31 und eine der ersten Elektrode 31 parallel gegenüberliegend angeordnete zweite Elektrode 32. Zwischen der ersten und der zweiten Elektrode 31, 32 ist eine Schicht aus transparenten Kugeln 33 angeordnet, in denen sich jeweils schwarze Pigmente 34 und weiße Pigmente 35 befinden.

Die schwarzen und weißen Pigmente 34, 35 sind unterschiedlich, insbesondere gegensätzlich, elektrisch geladen. Daher sammeln sich die schwarzen und weißen Pigmente 34, 35 an unterschiedlichen Elektroden 31, 32, d.h. auf verschiedenen Seiten der Anzeigevorrichtung 21, wenn eine elektrische Spannung U an die beiden Elektrode 31, 32 angelegt wird.

In dem in den Figuren 7a und 7b gezeigten Ausführungsbeispiel sind die schwarzen Pigmente 34 negativ geladen, und die weißen Pigmente 35 sind positiv geladen. Ist die Spannung U so gepolt, dass die erste Elektrode 31 negativ und die zweite Elektrode 32 positiv ist, sammeln sich die weißen Pigmente 35 an der ersten Elektrode 31 und die schwarzen Pigmente 34 an der zweiten Elektrode 32, wie es in der Figur 7a gezeigt ist.

Wird die Anzeigevorrichtung 21 nun von Seiten der transparenten ersten Elektrode 31 (in der Darstellung der Figur 7 "von oben") beleuchtet und betrachtet, erscheint die Anzeigevorrichtung 21 hell bzw. weiß.

Bei entgegengesetzt gepolter Spannung U (siehe Figur 7b) sammeln sich die schwarzen Pigmente 34 an der transparenten ersten Elektrode 31, und die Anzeigevorrichtung 21 erscheint dem Betrachter dunkel bzw. schwarz.

Die in den Figuren 7a und 7b gezeigte Anzeigevorrichtung 21 ist bi-stabil. D.h., sobald sich die Pigmente 34, 35 entsprechend der angelegten Spannung U an den Elektroden 31, 32 gesammelt haben, bleibt der Zustand der Anzeigevorrichtung 21 erhalten, ohne dass ein elektrischer Strom durch die Anzeigevorrichtung 21 fließt.

Nur zur Änderung der Anzeige, d.h. zum Umlagern der Pigmente 34, 35 zwischen den beiden Elektroden 31, 32, wird kurzzeitig elektrische Energie benötigt.

Diese Funktionsweise hat einen geringen Stromverbrauch zur Folge. Die Anzeigevorrichtung 21 kann daher gut über einen langen Zeitraum aus einer lokalen Energiequelle, wie z.B. Batterien oder Akkus, betrieben werden.

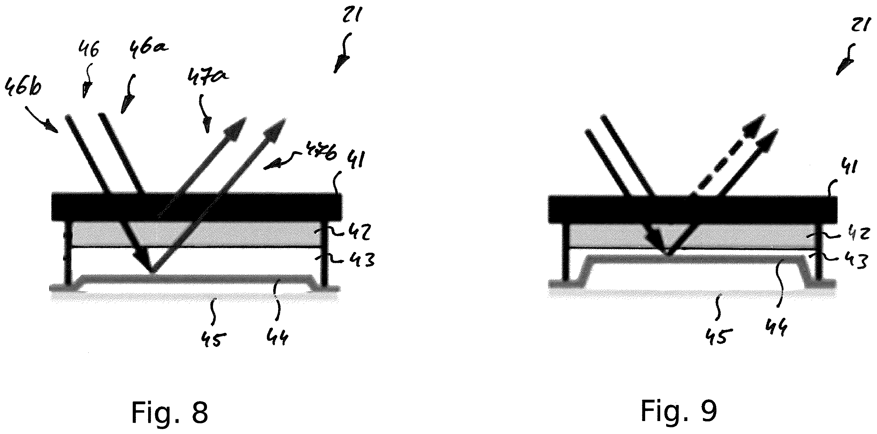

Die Figuren 8 und 9 zeigen jeweils eine schematische Schnittansicht durch ein alternatives Ausführungsbeispiel einer Anzeigevorrichtung 21, die auf einer alternativen Ausführungsform elektronischen Papiers beruht und die ebenfalls in einer erfindungsgemäßen Mustertafel 8 zum Einsatz kommen kann.

In dem in den Figuren 8 und 9 gezeigten Ausführungsbeispiel basiert die Anzeigevorrichtung 21 auf dem Prinzip der mikromechanisch gesteuerten Interferenz-Modulation. Die Anzeigevorrichtung 21 umfasst von außen nach innen (in den Figuren 8 und 9 von oben nach unten) eine äußere Deckschicht 41, eine auf einer Innenseite der Deckschicht 41 angebrachte Zwischenschicht 42, einen (mit Luft gefüllten) Hohlraum 43, eine lichtreflektierende, bewegliche Membran 44 und eine unterhalb der Membran 44 angeordnete Elektrode 45.

Fällt von Seiten der äußeren Deckschicht 41 Licht 46 auf die Anzeigevorrichtung 21, wird ein Teil 46a des einfallenden Lichtes 46 an der Grenzfläche zwischen der äußeren Deckschicht 41 und der darunter angeordneten Zwischenschicht 42 reflektiert.

Ein anderer Teil 46b des einfallenden Lichtes 46 durchdringt die Zwischenschicht 42 und den Hohlraum 43 und wird an der lichtreflektierenden, beweglichen Membran 44 reflektiert.

Die Abmessungen der Anzeigevorrichtung 21, insbesondere die Dicken der Zwischenschicht 42 und des Hohlraums 43, sind so gewählt, dass die reflektierten Lichtstrahlen 47a, 47b konstruktiv interferieren, wenn die lichtreflektierende, bewegliche Membran 44 so positioniert ist, wie es in der Figur 8 gezeigt ist. Die Anzeigevorrichtung 21 erscheint einem Betrachter dann hell bzw. weiß.

Durch Ändern des elektrischen Potenzials der Elektrode 45 kann die lichtreflektierende, bewegliche Membran 44 relative zur Elektrode 45 und den Schichten 41, 42 bewegt werden. Die lichtreflektierende, bewegliche Membran 44 kann insbesondere in die in der Figur 9 gezeigte Position bewegt werden.

Wenn sich die Membran 44 in einer Position befindet, wie sie in der Figur 9 gezeigt ist, interferiert das an der Membran 44 reflektierte Licht 47b destruktiv mit dem Licht 47a, das an der Grenzfläche zwischen der äußeren Deckschicht 41 und der darunter angeordneten Zwischenschicht 42 reflektiert wird. Die Anzeigevorrichtung 21 erscheint dem Betrachter daher dunkel bzw. schwarz.

Die in den Figuren 8 und 9 schematisch gezeigte Anzeigevorrichtung 21 kann also durch Ändern des elektrischen Potenzials der Elektrode 45 zwischen einem hell bzw. weiß erscheinenden Zustand (Figur 8) und einem dunkel bzw. schwarz erscheinenden Zustand (Figur 9) umgeschaltet werden.

Auch diese Ausführungsform einer Anzeigevorrichtung 21 ist bi-stabil, d.h. es fließt kein elektrischer Strom, wenn sich die Anzeigevorrichtung 21 in einem der beiden in den Figuren 8 und 9 gezeigten Zustände befindet. Auch diese Ausführungsform einer Anzeigevorrichtung 21 kann daher mit einem geringen Stromverbrauch betrieben werden.

Die Figuren 7a bis 9 zeigen zwei mögliche Ausführungsbeispiele einer erfindungsgemäßen Anzeigevorrichtung 21, die auf dem Prinzip des elektronischen Papiers ("E-Paper") basiert. Dem Fachmann sind weitere Ausführungsformen elektronischen Papiers bekannt, die für eine Anzeigevorrichtung 21 einer erfindungsgemäßen Messtafel 8 verwendet können. Alternative Ausführungsformen elektronischen Papiers umfassen insbesondere Anzeigevorrichtungen 21, deren Funktionsweise auf elektrophoretisch gesteuerter Totalreflexion, bistabilen LCDs oder Elektrobenetzung basiert.

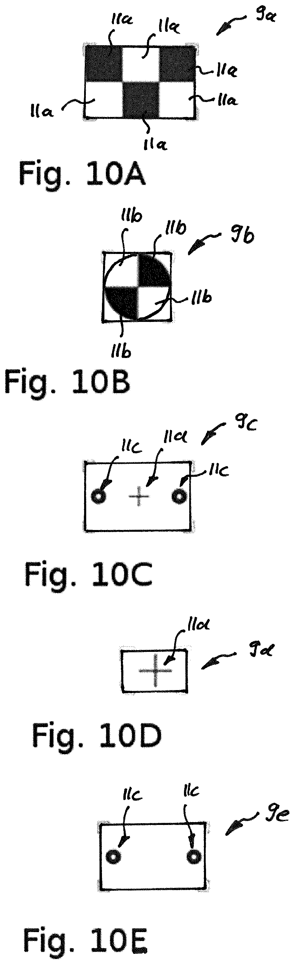

Die Figuren 10A bis 10E zeigen Beispiele unterschiedlicher Muster 9a-9e, wie sie in der Fahrzeugvermessung und/oder zum Kalibrieren von Sensorvorrichtungen 17 von Fahrerassistenzsystemen 15 zum Einsatz kommen können.

Die Figuren 10A bis 10E veranschaulichen, dass derartige Muster 9a-9e rechteckige Elemente 11a (Figur 10A), kreisförmige Elemente 11c (Figuren 10C und 10E), Kreissegmente 11b (Figur 10B) und/oder linienförmige Elemente 11d (Figuren 10C und 10D) umfassen können.

Um die gewünschten Muster 9a-9e mit gutem Kontrast und hoher Präzision anzuzeigen, ist eine Anzeigevorrichtung 21 gemäß einem Ausführungsbeispiel der Erfindung so ausgebildet, dass die Muster 9a-9e durch die physikalische Struktur der Anzeigevorrichtung 21 vorgegeben sind.

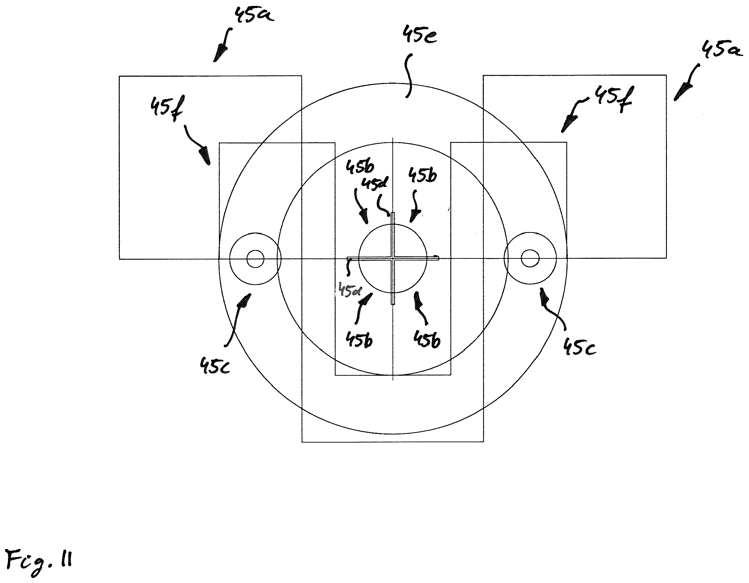

In einem Ausführungsbeispiel umfasst die Anzeigevorrichtung 21 mehrere Elektroden 45a-45f (siehe Figur 11), wobei jede der Elektroden 45a-45f so ausgebildet ist, dass ihre Form jeweils der Form eines Segments bzw. Elements lla-lld wenigstens eines der Muster 9a-9e entspricht.

Figur 11 zeigt in einer schematischen Ansicht eine Anordnung von Elektroden 45a-45f einer Anzeigevorrichtung 21 gemäß einem Ausführungsbeispiel der Erfindung.

Figur 11 zeigt insbesondere, dass die Anordnung Elektroden 45d, die linienförmigen Elementen 11d (vgl. Figuren 10C und 10D) entsprechen, Elektroden 45c, die kreisförmigen Elementen 11c (vgl. Figuren 10C und 10E) entsprechen, Elektroden 45b, die Kreissegmenten 11b (vgl. Figur 10B) entsprechen, und Elektroden 45a, 45f, die rechteckigen Elementen 11a (vgl. Figur 10A) entsprechen, umfasst.

Durch Ansteuern der entsprechenden Elektroden 45a-45f können die gewünschten Muster 9a-9e von der Anzeigevorrichtung 21 mit hoher Präzision und Auflösung angezeigt und exakt reproduziert werden.

In einem weiteren Ausführungsbeispiel sind nicht nur die Elektroden 45a-45f der Anzeigevorrichtung 21 so aufgebaut, dass sie die den Elementen bzw. Segmenten lla-lld der gewünschten Muster 9a-9e entsprechen.

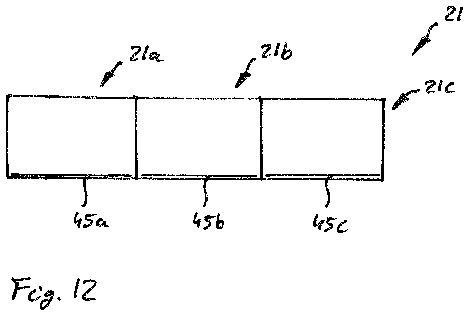

In einem solchen Ausführungsbeispiel, wie es schematisch in der Figur 12 gezeigt ist, ist die Anzeigevorrichtung 21 modular aufgebaut und umfasst mehrere Anzeigeelemente 21a-21c, z.B. Zellen oder Module. Dabei ist jedes Anzeigeelement 21a-21c für sich wie eine Anzeigevorrichtung 21 aufgebaut, wie sie beispielhaft in den Figuren 7a bis 9 gezeigt ist, so dass jedes Anzeigeelement 21a-21c durch Anlegen einer geeigneten Spannung zwischen hell (weiß) und dunkel (schwarz) umgeschaltet werden kann.

Die Form jedes Anzeigeelements 21a-21c entspricht dabei einem der Elemente bzw. Segmente lla-lld der darstellbaren Muster 9a-9e. Alternativ kann eines der Elemente bzw. Segmente lla-lld auch mehrere Anzeigeelemente 21a-21c umfassen.

Durch geeignetes Ansteuern der einzelnen Anzeigeelemente 21a-21c können die gewünschten Muster 9a-9e so mit hoher Präzision und Auflösung angezeigt und exakt reproduziert werden.

Ausführungsbeispiele der Erfindung ermöglichen es, auf einer einzigen Mustertafel 8 eine Vielzahl von Mustern 9a-9f anzuzeigen. Insbesondere ist eine Mustertafel 8, die gemäß einem Ausführungsbeispiel der Erfindung ausgebildet ist, in der Lage, die von unterschiedlichen Herstellen geforderten Muster 9a-9f anzuzeigen.

Auch in einer herstellerunabhängigen Werkstatt kann daher auf das Vorhalten einer Vielzahl unterschiedlicher Mustertafeln 8 verzichtet werden.

## Patentansprüche

1. Mustertafel (8) zur Fahrzeugvermessung und/oder zum Kalibrieren einer Sensorvorrichtung (17) in einem Kraftfahrzeug (18),
wobei die Mustertafel (8) eine Anzeigevorrichtung (21) umfasst, die ausgebildet ist, wahlweise eines von wenigstens zwei unterschiedlichen Mustern (9, 9a-9f) anzuzeigen;
**dadurch gekennzeichnet, dass** die Anzeigevorrichtung (21) nach dem Prinzip des elektronischen Papiers arbeitet, wobei die Muster (9, 9a-9f) mehrere Musterelemente (11a-11d) umfassen und die Anzeigevorrichtung (21) Elektroden (45a-45f) umfasst, die jeweils die Form eines der Musterelemente (11a-11d) oder eines Teilbereichs eines der Musterelemente (11a-11d) haben, so dass die Form der Musterelemente (11a-11d) jeweils durch die physikalische Struktur der Anzeigevorrichtung (21) vorgegeben ist.

2. Mustertafel (8) nach Anspruch 1, wobei die Anzeigevorrichtung (21) elektrisch ansteuerbar ist, um wahlweise eines von den wenigstens zwei unterschiedlichen Mustern (9, 9a-9f) anzuzeigen.

3. Mustertafel (8) nach Anspruch 1 oder 2, wobei die Muster (9, 9a-9f) linienförmige, kreisförmige, kreissegmentförmige und/oder rechteckige Musterelemente (11a-11d) umfassen.

4. Mustertafel (8) nach einem der vorangehenden Ansprüche , wobei die Anzeigevorrichtung (21) mehrere Anzeigeelemente (21a-21c) umfasst, die jeweils die Form eines der Musterelemente (11a-11d) oder eines Teilbereichs eines der Musterelemente (11a-11d) haben.

5. Mustertafel (8) nach einem der vorangehenden Ansprüche, wobei die Mustertafel (8) eine Steuerelektronik (25) zum Ansteuern der Anzeigevorrichtung (21) und/oder eine autonome Stromversorgung (24) aufweist.

6. Mustertafel (8) nach einem der vorangehenden Ansprüche, wobei die Mustertafel (8) eine Halterung (23), insbesondere eine kodierte Halterung (23), aufweist, die so ausgebildet ist, dass sie es ermöglicht, die Mustertafel (8) in einer vorgegebenen Position und Ausrichtung an einer Kalibriervorrichtung (2) anzubringen.

7. Mustertafel (8) nach einem der Ansprüche 1 bis 5, wobei die Mustertafel (8) einen Radadapter (30) aufweist, der so ausgebildet ist, dass er es ermöglicht, die Mustertafel (8) in einer vorgegebenen Position und Ausrichtung an einem Rad (14) eines zu vermessenden Fahrzeugs (18) anzubringen.

8. Kalibriervorrichtung (2) zum Kalibrieren einer Sensorvorrichtung (17) in einem Kraftfahrzeug (18), insbesondere für eine Sensorvorrichtung (17) eines Fahrerassistenzsystems (15), wobei die Kalibriervorrichtung (2) umfasst:
einen Fuß (4);
eine auf dem Fuß (4) abgestützte Säule (7); und
wenigstens eine an der Säule (7) angebrachtes Mustertafel (8) nach einem der Ansprüche 1 bis 5.

9. Verfahren des Kalibrierens einer Sensorvorrichtung (17) in einem Kraftfahrzeug (18), insbesondere für eine Sensorvorrichtung (17) eines Fahrerassistenzsystems (15), wobei das Verfahren umfasst,
eine Mustertafel (8) nach einem der Ansprüche 1 bis 6 in einem Sichtfeld der Sensorvorrichtung (17) anzuordnen, und
die Anzeigevorrichtung (21) der Mustertafel (8) derart anzusteuern, dass auf der Anzeigevorrichtung (21) ein zum Kalibrieren der Sensorvorrichtung (17) geeignetes Muster (9, 9a-9f) angezeigt wird.

10. Verfahren zur Fahrzeugvermessung, wobei das Verfahren umfasst,
wenigstens eine Mustertafel (8) nach Anspruch 7 an wenigstens einem Rad (14) eines zu vermessenden Fahrzeugs (18) anzubringen, und
die Anzeigevorrichtung (21) der Mustertafel (8) derart anzusteuern, dass auf der Anzeigevorrichtung (21) ein zur Fahrzeugvermessung geeignetes Muster (9, 9a-9f) angezeigt wird.

## Claims

1. A pattern panel (8) for vehicle wheel alignment measurement and/or for calibrating a sensor device (17) in a motor vehicle (18),
wherein the pattern panel (8) comprises a display device (21) designed to selectively display at leat one of two different patterns (9, 9a-9f);
**characterized in that** the display device (21) operates according to the principle of electronic paper, wherein the patterns (9, 9a-9f) comprise a plurality of pattern elements (11a-11d) and the display device (21) comprises electrodes (45a-45f) each having the shape of one of the pattern elements (11a-11d) or of a portion of one of the pattern elements (11a-11d), so that the shape of the respective pattern elements (11a-11d) is predefined by the physical structure of the display device (21).

2. The pattern panel (8) according to claim 1,
wherein the display device (21) is electrically controllable to selectively display one of the at least two different patterns (9, 9a-9f).

3. The pattern panel (8) according to claim 1 or 2,
wherein the patterns (9, 9a-9f) comprise line-shaped, circular, circle-segment-shaped and/or rectangular pattern elements (11a-11d).

4. The pattern panel (8) according to any of the preceding claims,
wherein the display device (21) comprises a plurality of display elements (21a-21c) each having the shape of one of the pattern elements (11a-11d) or of a portion of one of the pattern elements (11a-11d).

5. The pattern panel (8) according to any of the preceding claims,
wherein the pattern panel (8) comprises control electronics (25) for controlling the display device (21) and/or an autonomous power supply (24).

6. The pattern panel (8) according to any of the preceding claims,
wherein the pattern panel (8) has a holder (23), in particular a coded holder (23), which is designed to allow the pattern panel (8) to be attached to a calibration device (2) in a predetermined position and orientation.

7. The pattern panel (8) according to any of claims 1 to 5,
wherein the pattern panel (8) comprises a wheel adapter (30) which is designed to allow the pattern panel (8) to be attached to a wheel (14) of a vehicle (18) to be measured in a predetermined position and orientation.

8. A calibration device (2) for calibrating a sensor device (17) in a motor vehicle (18), in particular for a sensor device (17) of a driver assistance system (15), wherein the calibration device (2) comprises:
a foot (4);
a column (7) supported on the foot (4); and
at least one pattern panel (8) according to any of claims 1 to 5 attached to the column (7).

9. A method of calibrating a sensor device (17) in a motor vehicle (18), in particular for a sensor device (17) of a driver assistance system (15), wherein the method comprises:
arranging a pattern panel (8) according to any of claims 1 to 6 in a field of view of the sensor device (17), and
controlling the display device (21) of the pattern panel (8) such that a pattern (9, 9a-9f) suitable for calibrating the sensor device (17) is displayed on the display device (21).

10. A method of vehicle wheel alignment measurement,
wherein the method comprises:
attaching at least one pattern panel (8) according to claim 7 on at least one wheel (14) of a vehicle (18) to be measured, and
controlling the display device (21) of the pattern panel (8) such that a pattern (9, 9a-9f) suitable for vehicle wheel alignment measurement is displayed on the display device (21).

## Revendications

1. Tableau de motifs (8) pour la mesure de véhicules automobiles et/ou l'étalonnage d'un dispositif capteur (17) dans un véhicule automobile (18),
le tableau de motifs (8) comprenant un dispositif d'affichage (21) réalisé de manière à afficher au choix l'un d'au moins deux motifs différents (9, 9a-9f) ;
**caractérisé en ce que** le dispositif d'affichage (21) travaille selon le principe du papier électronique, sachant que les motifs (9, 9a-9f) comprennent plusieurs éléments de motif (11a-11d) et que le dispositif d'affichage (21) comprend des électrodes (45a-45f) qui ont chacune la forme de l'un des éléments de motif (11a-11d) ou d'une partie de l'un des éléments de motif (11a-11d), de telle sorte que la forme des éléments de motif (11a-11d) est prédéfinie par la structure physique du dispositif d'affichage (21).

2. Tableau de motifs (8) selon la revendication 1, dans lequel le dispositif d'affichage (21) peut être commandé électriquement pour afficher au choix l'un des au moins deux motifs différents (9, 9a-9f).

3. Tableau de motifs (8) selon la revendication 1 ou 2, dans lequel les motifs (9, 9a-9f) comprennent des éléments de motif (11a-11d) en forme de ligne, de cercle, de segment de cercle et/ou de rectangle.

4. Tableau de motifs (8) selon l'une quelconque des revendications précédentes, dans lequel le dispositif d'affichage (21) comprend plusieurs éléments d'affichage (21a-21c) qui ont chacun la forme de l'un des éléments de motif (11a-11d) ou d'une partie de l'un des éléments de motif (11a-11d).

5. Tableau de motifs (8) selon l'une quelconque des revendications précédentes, dans lequel le tableau de motifs (8) présente un système électronique de commande (25) permettant de commander le dispositif d'affichage (21) et/ou une alimentation électrique autonome.

6. Tableau de motifs (8) selon l'une quelconque des revendications précédentes, dans lequel le tableau de motifs (8) présente un support (23), en particulier un support codé (23), réalisé de manière à permettre la fixation du tableau de motifs (8) sur un dispositif d'étalonnage (2) dans une position et selon une orientation prédéfinies.

7. Tableau de motifs (8) selon l'une quelconque des revendications 1 à 5, dans lequel le tableau de motifs (8) présente un adaptateur pour roue (30) réalisé de manière à permettre de fixer le tableau de motifs (8) dans une position et selon une orientation prédéfinies sur une roue (14) d'un véhicule automobile (18) à mesurer.

8. Dispositif d'étalonnage (2) permettant d'étalonner un dispositif capteur (17) dans un véhicule automobile (18), en particulier pour un dispositif capteur (17) d'un système d'assistance à la conduite (15), le dispositif d'étalonnage (2) comprenant :
un pied (4) ;
une colonne (7) reposant sur le pied (4) ; et
au moins un tableau de motifs (8) fixé à la colonne (7) selon l'une quelconque des revendications 1 à 5.

9. Procédé d'étalonnage d'un dispositif capteur (17) dans un véhicule automobile (18), en particulier pour un dispositif capteur (17) d'un système d'assistance à la conduite (15), le procédé comprenant
d'agencer un tableau de motifs (8) selon l'une quelconque des revendications 1 à 6 dans un champ de vision du dispositif capteur (17) et
de commander le dispositif d'affichage (21) du tableau de motifs (8) de telle sorte que le dispositif d'affichage (21) affiche un motif (9, 9a-9f) adapté pour l'étalonnage du dispositif capteur (17).

10. Procédé de mesure d'un véhicule automobile, le procédé comprenant
de fixer au moins un tableau de motifs (8) selon la revendication 7 sur au moins une roue (14) d'un véhicule automobile (18) à mesurer et
de commander le dispositif d'affichage (21) du tableau de motifs (8) de telle sorte que le dispositif d'affichage (21) affiche un motif (9, 9a-9f) adapté pour la mesure du véhicule automobile.
